(19) Europäisches Patentamt
European Patent Office
Office européen des brevets

(11) EP 2 735 579 A1

(12) EUROPEAN PATENT APPLICATION

(43) Date of publication:
28.05.2014 Bulletin 2014/22

(51) Int Cl.:
*C08G 63/553* (2006.01) *C08L 67/07* (2006.01)

(21) Application number: 12193999.5

(22) Date of filing: 23.11.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: DSM IP Assets B.V.
6411 TE Heerlen (NL)

(72) Inventors:
- Gorzolnik, Blazej Michal
6100 AA Echt (NL)
- Jansen, Johan Franz Gradus Antonius
6100 AA Echt (NL)

(74) Representative: Verhaegen, Ilse Maria M.
DSM Intellectual Property
Urmond Office
P.O. Box 4
6100 AA Echt (NL)

(54) **Radically curable resin composition**

(57) The invention relates to a radically curable unsaturated polyester resin composition comprising copolymerisable solvent, characterized in that the composition comprises an unsaturated polyester resin (I) with formula A-P-$A_n$ in which n= 0 or 1, A is according to structural formula (1)

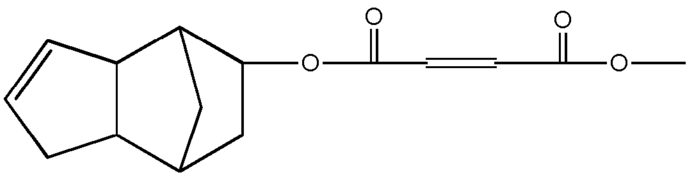

(1)

and P comprises diol building blocks (B) according to formula (2)

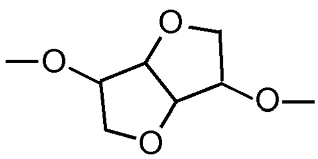

(2).

EP 2 735 579 A1

## Description

The present invention relates to a radically curable, thermosetting unsaturated polyester resin composition comprising copolymerisable solvent.

Such a resin composition may be used for preparing moulded parts for use in high temperature applications where the moulded part during its normal lifetime is in contact with a heat source which frequently attains a temperature of at least 200 °C and/or attains for a longer period of time a temperature of at least 180 °C. Examples of heat sources in for example automotive applications are engines, or elements thereof, or headlamps. High thermal stability of moulded parts used in high temperature applications is an important characteristic since due to thermal degradation of the moulded part, weight loss may occur, resulting in decrease of mechanical properties and which can ultimately lead to full degradation of the part. Improving the thermal resistance may also result in a longer life time of the moulded part. Examples of high temperature applications where high thermal resistance is an important characteristic are the housings and reflectors of automotive headlights and moulded parts used under-the-hood. Headlights contain a housing with a transparent front (the glass), within which housing a reflector is placed that is designed so that, when the light comes on, a well-aligned beam of light is formed that leaves the headlight through the glass. Headlight housings are for example made by injection moulding of BMC ('Bulk Moulding Compounds') resin compositions.

An example of an unsaturated polyester resin which is often used in high temperature applications, such as headlights, is Palapreg®P18-21, a so-called pure maleic unsaturated polyester resin dissolved in styrene. In EP-A-1052273 Palapreg®P18-21 is used, in combination with another unsaturated polyester resin, to obtain a resin composition with reduced fogging. In EP-A-1 052273 thermal stability of the moulded part is already partially addressed in the experimental part in that the moulded parts are subjected to a fogging test. In this fogging test, effected at temperatures ranging from 160-170 °C, volatiles coming from the moulded parts are determined. The fogging test however yields no indication on the life time of the moulded part at higher temperature and on the thermal stability for longer periods of time. As will be demonstrated in the experimental part, employing such a pure maleic unsaturated polyester resin still does not give a good thermal stability when used for a prolonged period of time at temperatures above 180 °C. The tendency in automotive applications, however, is that the temperature of the heat sources further increases. For example in headlights for cars or lorries, the headlamps become more and more intense thus higher temperatures occur, and thus the thermal stability of the housings become even more and more critical.

Consequently there is still a need to improve the thermal stability of moulded parts obtained from radically curable, thermosetting unsaturated polyester resin composition comprising copolymerisable solvent.

The object of the invention is therefore to provide a radically curable, thermosetting unsaturated polyester resin that is able to improve the thermal resistance of cured objects obtained by curing resin compositions comprising such unsaturated polyester resin.

This object is surprisingly achieved in that the composition comprises an unsaturated polyester resin (I) with formula $A-P-A_n$ in which n= 0 or 1, A is according to structural formula (1),

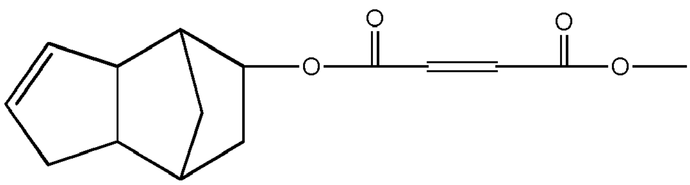

(1)

and P comprises diol building blocks (B) according to formula (2)

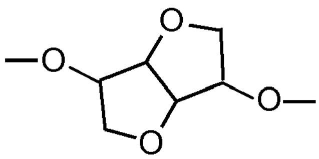

(2).

An additional advantage is that the unsaturated polyester resins (I), with formula $A-P-A_n$ as defined above, dissolved in reactive diluent are transparent, whereas in case P does not contain a building block with formula (2), the transparency reduces significantly.

The molar ratio of buildings blocks (A) to building blocks (B) in the unsaturated polyester (I) is preferably higher than or equal to 1, more preferably higher than or equal to 1.5 and even more preferably higher than or equal to 2. The

molar ratio of buildings blocks (A) to building blocks (B) in the unsaturated polyester (I) is preferably lower than or equal to 20, more preferably lower than or equal to 15 and even more preferably lower than or equal to 10. The molar ratio of buildings blocks (A) to building blocks (B) in the unsaturated polyester (I) is preferably higher than or equal to 1 and lower than or equal to 20, more preferably higher than or equal to 1 and lower than or equal to 15 and even more preferably higher than or equal to 1 and lower than or equal to 10. The molar ratio of buildings blocks (A) to building blocks (B) in the unsaturated polyester (I) is preferably higher than or equal to 1.5 and lower than or equal to 20, more preferably higher than or equal to 1.5 and lower than or equal to 15 and even more preferably higher than or equal to 1.5 and lower than or equal to 10.The molar ratio of buildings blocks (A) to building blocks (B) in the unsaturated polyester (I) is preferably higher than or equal to 2 and lower than or equal to 20, more preferably higher than or equal to 2 and lower than or equal to 15 and even more preferably higher than or equal to 2 and lower than or equal to 10.

Preferably, the molar ratio of buildings blocks (A) to building blocks (B) in the unsaturated polyester (I) is from 1 up to and including 20. More preferably, the molar ratio of buildings blocks (A) to building blocks (B) in the unsaturated polyester (I) is from 1.5 up to and including 15. Even more preferably, the molar ratio of buildings blocks (A) to building blocks (B) in the unsaturated polyester (I) is from 2 up to and including 10.

Preferably, P further comprises fumarate, maleate and/or itaconate units as unsaturated diacid building blocks. The amount of fumarate, maleate and/or itaconate units is preferably chosen such that the molar amount of reactive C=C unsaturations in P relative to the molar amount of building blocks (B) in the unsaturated polyester resin (I) is from 1:40 up to and including 10:1, preferably from 1:30 up to and including 1:5, more preferably from 1:20 up to and including 2:1. As meant herein, reactive C=C unsaturations in P refers to C=C unsaturations that are reactive in the radical copolymerization of the unsaturated polyester resin (I) with the copolymerisable solvent. For the purpose of clarity, C=C unsaturations of aromatic rings do not react in the radical copolymerization of the unsaturated polyester resin (I) with the copolymerisable solvent.

Preferably, P further comprises glycol units as additional diol building blocks. Preferred glycols are ethylene glycol, diethylene glycol, propylene glycol, dipropylene glycol, neopentyl glycol and combinations thereof.

Preferably, the unsaturated polyester (I) preferably further comprises, as additional unsaturated diacid building blocks, fumarate units and, as additional diol building blocks, glycol units selected from the group consisting of ethylene glycol, propylene glycol and neopentyl glycol and combinations thereof. More preferably, the unsaturated polyester (I) further comprises fumarate units as the additional unsaturated diacid building blocks and additional diol building blocks. The additional diol building blocks are glycol units selected from the group consisting of ethylene glycol, propylene glycol and neopentyl glycol and combinations thereof. P may further comprise building blocks derived from saturated aliphatic dicarboxylic acids and/or anhydrides, like for example oxalic acid, succinic acid, adipic acid, sebacic acid and/or derived from aromatic dicarboxylic acids and/or anhydrides like for example phthalic acid or anhydride and isophthalic acid.

Preferably, the molar amount of glycol units relative to the molar amount of building blocks (B) in the unsaturated polyester resin (I) is from 1:100 up to and including 100:1, more preferably from 1:50 up to and including 50:1, even more preferably from 1:20 up to and including 20:1 and even more preferably from 1:10 up to and including 10:1.

Preferably, the unsaturated polyester resin (I) comprises isosorbide building blocks as diol building block according to formula (2). More preferably the diol building block according to formula (2) are isosorbide building blocks.

The unsaturated polyester resin (I) preferably has a molecular weight of at most 10.000 Dalton, preferably at most 5000 Dalton, even more preferably at most 2500 Dalton. As used herein, the molecular weight of the resin is determined in tetrahydrofurane using gel permeation chromatography according to ISO 13885-1 employing polystyrene standards and appropriate columns designed for the determination of the molecular weights. The unsaturated polyester resin (I) preferably has an acid value in the range from 10 to 50 mg KOH/g resin, more preferably in the range from 20 to 40 mg KOH/g resin and even more preferably in the range from 25 to 35 mg KOH/g resin . As used herein, the acid value of the resin is determined titrimetrically according to ISO 2114-2000. The unsaturated polyester resin (I) preferably has hydroxyl value in the range from 0 to 50 mg KOH/g resin, more preferably in the range from 5 to 40 mg KOH/g resin and even more preferably in the range from 10 to 30 mg KOH/g resin. As used herein, the hydroxyl value of the resin is determined titrimetrically according to ISO 4629-1978.

The copolymerizable solvent which will, upon curing, copolymerize with the unsaturated polyester generally has the function of a cross-linking agent and a diluent for the unsaturated polyester resin. Examples of suitable copolymerizable solvents are, for instance, alkenyl aromatic monomer such as for example styrene and divinylbenzene but all other reactive solvents for use in the field of thermosetting resins as are known to the skilled man can be used. Preferred copolymerizable solvents are styrene, alpha-methyl styrene, chlorostyrene, vinyl toluene, divinyl benzene, methyl methacrylate, tert.butyl styrene, tert.butylacrylate, butanediol dimethacrylate and mixtures thereof. Most preferred copolymerizable solvent is styrene. Preferably, the resin composition comprises styrene as copolymerizable solvent. More preferably, the copolymerizable solvent present in the resin composition is styrene. The amount of copolymerisable solvent generally is from 10 up to and including 80 wt.%, preferably from 20 up to and including 70 wt.%. As used herein, the amounts in wt.% are given, unless indicated differently, relative to the total weight (in g) of the summed amount of unsaturated polyester resin and copolymerisable solvent.

The resin composition according to the invention preferably comprises one or more fillers. Preferably, the total amount (in wt.%) of unsaturated polyester resin present in the resin composition relative to the amount (in wt.%) of filler present in the resin composition is from 1:2 up to and including 20:1, preferably from 1:1.5 up to and including 10:1, more preferably from 1:1 up to and including 5:1. The filler is preferably a group I metal hydroxide, a group II metal hydroxide, a group I metal oxide, a group II metal oxide, a group I metal hydrocarbonate, a group II metal hydrocarbonate, a group I metal carbonate, a group II metal carbonate or a mixture thereof. More preferably, the filler is a group II metal hydroxide, a group II metal oxide, a group II metal hydrocarbonate, a group II metal carbonate or a mixture thereof. Even more preferably, the filler is calcium hydroxide, magnesium hydroxide, calcium oxide, magnesium oxide, calcium hydrocarbonate, magnesium hydrocarbonate, calcium carbonate, magnesium carbonate or a mixture thereof. Even more preferably, the filler is calcium oxide, magnesium oxide, calcium carbonate, magnesium carbonate or a mixture thereof. Preferably, at least 50 wt.% of the total amount of filler is $CaCO_3$ MgO or a mixture thereof. More preferably, at least 70 wt.% of the total amount of filler is $CaCO_3$.

Preferably, the resin composition according to the invention comprises filler. More preferably, the resin composition comprises filler and reinforcing fibers. Even more preferably, the resin composition comprises filler, reinforcing fibers and anti-shrinkage additive. The anti-shrinkage additive is preferably a low-profile additive. Even more preferably, the resin composition comprises filler, reinforcing fibers, anti-shrinkage additive and a radical polymerization inhibitor. A man skilled in the art knows which ranges can be applied for such components of the curable resin composition of the present invention. Common ranges are: 5-35 wt% unsaturated polyester, 25-75 wt% copolymerisable solvent, 0-10 wt% anti-shrinkage additive, 0-55 wt% filler and 0-50 wt% fibrous reinforcement material (relative to the total resin composition).

For initiating the radical copolymerization of the unsaturated polyester resin with copolymerizable solvent, a radical initiator, preferably a peroxide, is added to the resin composition optionally in combination with other compounds having a role in the radical initiation process, like for example compounds that accelerate the decomposition of the peroxide (peroxide decomposition accelerator, also referred to as accelerator) and/or compounds that inhibit the decomposition of the peroxide (also referred to as radical polymerization inhibitor). Such compounds or some of such compounds may already be present in the resin composition prior to the addition of the peroxide. For example, an accelerator and/or a radical polymerization inhibitor may already be present in the resin composition prior to the addition of the peroxide. The radical initiating system preferably at least comprises, as radical initiator, a peroxide or a mixture of peroxides, an accelerator and a radical polymerisation inhibitor. The radical initiating system may further comprise a co-accelerator. In case used, the accelerator(s), the radical polymerisation inhibitor(s) and the co-accelerator(s) are preferably present in the thermosetting resin composition prior to adding the peroxide.

The present invention therefore further relates to a multicomponent resin system comprising at least two components (1) and (2), whereby component (1) comprises a thermosetting resin composition as described above and component (2) comprises a radical initiator in an amount from 1 up to and including 20 wt.%, whereby the amount is given relative to the total weight (in g) of the thermosetting resin composition. The radical initiator is preferably a peroxide or a mixture of peroxides.

In one preferred embodiment of the invention, the radical initiator system is the combination of at least one radical polymerization inhibitor, at least one transition metal compounds (having the role of accelerator) like for example a Co, Cu, Mn or Fe compound in combination with a hydroperoxide like for instance t-butyl hydroperoxide and cumenehydroperoxide, a perketal like for instance methyl ethyl ketone peroxide and acetylacetone peroxide, a perester like for instance t-butyl perbenzoate and a percarbonate, preferably in combination with a co-accelerator. The co-accelerator can be any organic compound that can be oxidized or reduced. Suitable examples are 1,2-dioxo compounds, 1,3-dioxo compounds, thiols, and N containing compounds like amides and amines. The preferred co-accelerator depends on the transition metal used. An example of a suitable 1,2-dioxo compound is butane-2,3-dione. Examples of suitable 1,3-dioxo compounds are acetylacetone, ethylacetoacetate and acetioacetamides like for instance N,N-diethylacetoacetamide. Examples of suitable amines are N,N-dimethylaniline, N,N-diethylaniline, N,N-dimethylparatoluidine, benzyl amine, p-toluidine, 2-(N-ethylanilino)ethanol, triethanol amine, triethyl amine and Jeffamines, like for example Jeffamine D-2000. Alternatively, in another preferred embodiment of the invention, the radical initiating system is the combination of at least one radical polymerization inhibitor, a tertiary aromatic amine like for instance N,N-dimethylaniline, N,N-diethylaniline, N,N-dimethylparatoluidine, N,N-diisopropyltoluidine with a peranhydride like for instance di benzoyl peroxide (BPO) or di lauroyl peroxide.

For BMC (bulk-moulding compound) resin compositions, typically peresters and/or monopercarbonates are used.

The thermosetting resin composition according to the invention preferably further comprises radical polymerization inhibitiors. By using these inhibitors it is possible to retard the radical polymerization process. These radical inhibitors are preferably chosen from the group of phenolic compounds, hydroquinones, catechols, benzoquinones stable radicals and/or phenothiazines. The amount of radical inhibitor that can be added may vary within rather wide ranges.

The resin composition according to the invention may further comprise unsaturated polyesters not comprising

building blocks (A) and/or building blocks (B). The amount of unsaturated polyesters not comprising building blocks (A) and/or building blocks (B) relative to the amount of unsaturated polyesters (I) comprising building blocks (A) and building blocks (B) is at most 90 wt.%, preferably at most 80 wt.%, more preferably at most 70 wt.% and even more preferably at most 60 wt.%. The unsaturated polyesters not comprising building blocks (A) and/or building blocks (B) preferably comprises fumarate and/or itaconate building blocks. The maximum amount depends on the required thermal resistance of the cured part.

The present invention preferably further relates to the use of a multi-component system according to the invention for producing a structural part that is subjected to heat. The structural part is preferably a BMC (bulk-moulding compound) part.

The present invention further relates to a method for curing a resin composition as described above, wherein the curing is effected by mixing the resin composition with a radical initiator to obtain a mixture and moulding said mixture at increased temperature, preferably at a temperature that is at least 130°C, and more preferably at least 140°C; the temperature is preferably at most 170°C, more preferably at most 160°C.

The present invention further relates to cured object (structural part) obtained by mixing the components of the multi-component system as described above and moulding said mixture at a temperature of at least 130°C and at most 170°C. The present invention in particular relates to a BMC part obtained by thermally curing a multi component system according to the invention in a BMC mould, preferably the thermally curing is effected at a temperature of at most 170°C. The BMC part will be subjected to heat in the end-use application.

The present invention further relates to an unsaturated polyester resin (I) with formula A-P-$A_n$ in which n= 0 or 1, A is according to structural formula (1)

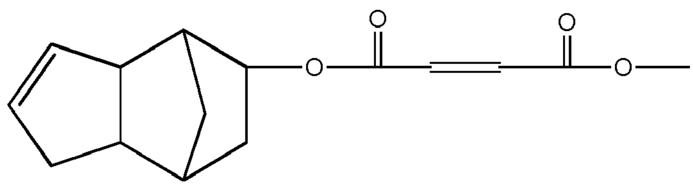

(1)

and P comprises diol building blocks (B) according to formula (2)

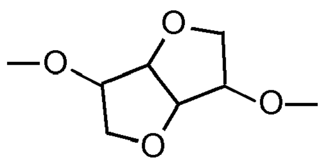

(2).

Further preferred building blocks and molar ratios are as described above.

The invention is now demonstrated by means of a series of examples and comparative examples. All examples are supportive of the scope of claims. The invention, however, is not restricted to the specific embodiments as shown in the examples.

<u>Example 1 and Comparative Experiments A-E</u>

**Acid Value**

The acid values of the unsaturated polyester resins were determined titrimetrically with a potentio-metric titrator (Titrino 798, Metrohm) according to ISO 2114-2000.

**Viscosity**

The melt viscosity of unsaturated polyester resin was measured with Brookfield CAP 2000, at 150°C, with 750 rpm using cone 4.

The viscosity of final resin (unsaturated polyester in styrene) was determined at 23°C according to ISO 3219, using a Physica MC1 viscometer.

**Thermal Gravimetric Analysis (TGA)**

The samples for thermal gravimetric analysis (TGA) were prepared as following. 100g of the unsaturated polyester resin was mixed with 2g of Trigonox C (obtained from Akzo Nobel, peroxide) and placed for 0.5h in a batch at 130°C. The cured resin was grained and TGA was performed (10 min isothermal at 25°C followed by temperature ramp 20°C/min to 220°C) under flow of helium (25 ml/min He) in order to estimate the weight-loss at 220°C.

**Weight-loss**

The weight-loss experiments were performed in duplicate on moulded BMC plates (DEREK type machine). First, initial mass of plates ($w_0$) was measured at room temperature. Plates were then aged at 220°C and mass ($w_i$) after 6, 42 and 98 days was determined. Weight-loss was calculated as follows:

$$\text{Weight loss (\%)} = (w_0 - w_i)*100/w_0$$

**Synthesis of unsaturated polyesters**

Synthesis of isosorbide containing DCPD polyester resin A

A 6 liter round bottom glass flask, equipped with nitrogen inlet, Vigreaux column and mechanical stirrer was charged with 1338 g of maleic anhydride. The flask was warmed up to 100°C and anhydride was hydrolyzed with water (300g). The resulted maleic acid was reacted with dicyclopentadiene DCPD (1745g) to give corresponding half ester. After complete reaction of DCPD, the glycols (327 g of ethylene glycol and 330 g of isosorbide) and 0.28 g hydroquinone were added to the reactor. The temperature was slowly raised to 200°C during 3 hr followed by maintaining the temperature at 200°C until acid value below 30 mg KOH/g was reached. After that the temperature was lowered to 120°C, 0.06 g of hydroquinone, 0.1g of 1,4-naphthoquinone and 1150 g of styrene were added. Subsequently mixture was cooled to RT and was further adjusted with styrene to solid content of 69,5 % and stirred for 3h to completely homogenize. The viscosity of final resin was found to be 630 mPa*s. The number average molecular weight (Mn) of the resin was Mn = 620 kg/mol with a polydispersity index (PDI) of 2.9.

Synthesis of a DCPD polyester resin B

A comparative resin as resin A but without isosorbide was synthesized in a similar manner as used for resin A. To the preformed DCPD-maleate half ester, 467 g of ethylene glycol and inhibitor were added. After reaching final acid value of 26 mg KOH/g, inhibitors and styrene were added. The resin was adjusted with styrene to solid content of 69.5 % with final resin viscosity of 860 mPa*s. The Mn of the resin was 650 kg/mol with a PDI of 2.6.

Synthesis of isosorbide containing pure maleic polyester resin C

A comparative resin as resin A but without DCPD was synthesized in a similar manner as used for resin A. A 4 liter glass flask, equipped with nitrogen inlet, Vigreaux column and mechanical stirrer was charged with 1226 g of maleic anhydride, 563 g of isosorbide, and 605 g of ethylene glycol. The flask was purged with nitrogen then 0.3 g of hydroquinone was added. The flask was then heated to 140 °C in 1h with electrical heating mantle controlled by the time/temperature programmable controller. The temperature was increased from 140 to 200 °C over 2h and finally kept at 200 °C until an acid value of 28 mg KOH/g and melt viscosity of 3000mPa.s (at 150°C) were reached. The resin was cooled down and inhibitor as well as styrene was added. The resin was adjusted with styrene to solid content of 65.2 %. The resin crystallized few hours later. Consequently, it was not possible to make a BMC part of it. Therefore an analogous resin E has been prepared.

Synthesis of pure maleic polyester resin D

A comparative polyester as resin C but without isosorbide was synthesized in a similar manner as used for resin C. In this case 1373 g of maleic anhydride, 945 g of ethylene glycol were used.

After reaching final acid value of 24.5 mg KOH/g, and melt viscosity of 730mPa.s (at 150°C), resin was stabilized with inhibitor and styrene was added. The resin was adjusted with styrene to solid content of 66.5 %. Upon cooling to RT two phases developed and resin crystalized. No BMC was possible. Therefore an analogous resin F has been

prepared.

Synthesis of isosorbide containing pure maleic polyester resin E

A 6 liter round bottom glass flask, equipped with nitrogen inlet, Vigreaux column and mechanical stirrer was charged with 1961 g of maleic anhydride, 1049 g of propylene glycol, 417 g of neopentyl glycol and 585 g of isosorbide. The synthesis was performed in similar manner as used for resin C until acid value equal to 26 mg KOH/g was reached. After that the temperature was lowered to 120 °C and inhibitor as well as styrene was added. The mixture was adjusted with styrene to solid content of 65%. The resin dissolved in styrene had viscosity of 3260 mPa*s at 23 °C.

Synthesis of pure maleic polyester resin F

A comparative polyester as resin C but without isosorbide was synthesized in a similar manner as used for resin C. In this case 2226g of maleic anhydride, 1536 g of propylene glycol and 417 g of neopentyl glycol were used.
After reaching final acid value of 27 mg KOH/g, inhibitor and styrene were added. The resin was adjusted with styrene to solid content of 66.5 % and viscosity of 2240 mPa*s at 23°C.

Table 1: Molar ratios of building materials for the unsaturated polyesters

| Molar amount | Unsaturated polyester resin A | Unsaturated polyester resin B | Unsaturated polyester resin C | Unsaturated polyester resin D | Unsaturated polyester resin E | Unsaturated polyester resin F |
|---|---|---|---|---|---|---|
| Maleic anhydride | 1 | 1 | 1 | 1 | 1 | 1 |
| DCPD-maleate according to formula (1) | 0.97 | 0.97 | 0 | 0 | 0 | 0 |
| Isosorbide according to formula (2) | 0.16 | 0 | 0.31 | 0 | 0.2 | 0 |
| Ethylene glycol | 0.39 | 0.55 | 0.78 | 1.09 | 0 | 0 |
| Propylene glycol | 0 | 0 | 0 | 0 | 0.69 | 0.89 |
| Neopentyl glycol | 0 | 0 | 0 | 0 | 0.2 | 0.2 |

Preparation of BMC formulation

The BMC formulations were prepared as follows: 100 wt. parts of unsaturated polyester resin in styrene, 1.7 wt. parts of Trigonox C (Akzo Nobel, peroxide), 0.05 wt. parts of PBQ solution (10% of 1,4-benzoquinone in 1/1 styrene/acetone, inhibitor), 220 wt. parts of Milicarb (Omya UK, $CaCO_3$ filler), 5 wt. parts Calcium stearate (Bearlocher, release agent) were mixed in a Z blade kneader (Fritz Meili DK-20). To this mixture 15 wt% glass fiber (OCV 979, 6 mm, OCV France) was added.
The formulations were molded and cured in the mold (100 bar, 180 seconds, 150 °C (matrix mould-half)/150 °C (matrix mould-half, DEREK type plate)). After curing the weight-loss experiments were performed. The results are shown in table 2.

Table 2: Thermal properties of the cured resins and BMC molded parts

| | Example 1 | Comparative experiment A | Comparative experiment B | Comparative experiment C | Comparative experiment D | Comparative experiment E |
|---|---|---|---|---|---|---|
| Unsaturated Polyester Resin | A | B | C | D | E | F |
| Composition | | | | | | |
| MA | + | + | + | + | + | + |
| DCPD | + | + | - | - | - | - |
| Isosorbide | + | - | + | - | + | - |
| EG | + | + | + | + | | |
| PPG | - | - | - | - | + | + |
| NPG | - | - | - | - | + | + |
| Appearance of the non-cured resin in styrene | Transparent | Not transparent | Not transparent | Not transparent | Transparent | Transparent |
| TGA weight loss at 220 °C (%) | 2.0 | 1.3 | Not measurable | Not measurable. | 0.9 | 1.3 |
| weight-loss of BMC after 6 days at 220 °C (%) | 1.8 | 2.0 | Not measurable | Not measurable | 19.7 | 19.7 |
| weight-loss of BMC after 42 days at 220 °C (%) | 3.8 | 8.0 | Not measurable | Not measurable | > 23 | > 23 |
| weight-loss of BMC after 98 days at 220 °C (%) | 10.7 | 19.0 | Not measurable | Not measurable | > 23 | > 23 |

Unsaturated polyester resin F (Comparative Experiment E) is currently commercially used for BMC applications. However, as can be derived from Table 2, the weight loss due to thermal ageing is high and thus the thermal resistance is low. It has surprisingly been found that with a resin as claimed, the weight loss due to thermal ageing decreased significantly (Ex 1). When using a DCPD unsaturated polyester resin B (Comp Ex A), the weight loss due to thermal ageing is much lower and thus the thermal resistance is higher. It has surprisingly been found that incorporating also isosorbide, next to DCPD, the thermal resistance even further improves. This is even more surprising since with isosorbide containing UP resin E (Comp Ex D) the thermal resistance does not improve at all. This is surprising in view of the TGA results. Resin composition with resin A have highest TGA weight loss and therefore one would expect the lowest thermal stability. However, we surprisingly found that moulded BMC parts based on resin composition with resin A has the highest thermal stability.

## Claims

1. Radically curable unsaturated polyester resin composition comprising copolymerisable solvent, **characterized in that** the composition comprises an unsaturated polyester resin (I) with formula $A-P-A_n$ in which n= 0 or 1, A is

according to structural formula (1)

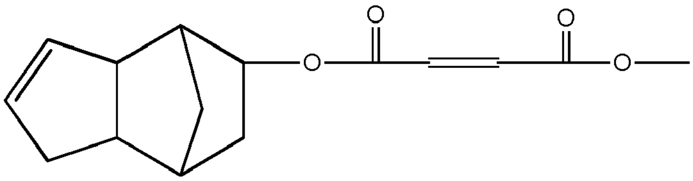

(1)

and P comprises diol building blocks (B) according to formula (2)

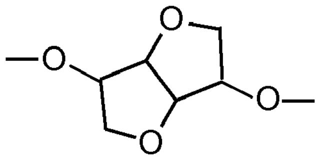

(2).

2. Resin composition according to claim 1, **characterized in** the resin composition further comprises filler.

3. Resin composition according to claim 1 or 2, **characterized in that** molar ratio of buildings blocks (A) to building blocks (B) in the unsaturated polyester (I) is from 1 up to and including 20.

4. Resin composition according to any of the preceding claims, **characterized in that** P further comprises fumarate, maleate and/or itaconate units as diacid building blocks.

5. Resin composition according to any of the preceding claims, **characterized in that** the molar amount of reactive C=C unsaturations in P relative to the molar amount of building blocks (B) in the unsaturated polyester resin (I) is from 1:40 up to and including 10:1.

6. Resin composition according to any of the preceding claims, **characterized in that** P further comprises glycol units as additional diol building blocks.

7. Resin composition according to claim 6, **characterized in that** the molar amount of glycol units relative to the molar amount of building blocks (B) in the unsaturated polyester resin (I) is from 1:100 up to and including 100:1, preferably from 1:50 up to and including 50:1, more preferably from 1:20 up to and including 20:1 and even more preferably from 1:10 up to and including 10:1.

8. Resin composition according to any of the preceding claims, **characterized in that** the unsaturated polyester resin (I) comprises isosorbide building blocks as diol building block according to formula (2).

9. Resin composition according to any of the preceding claims, **characterized in that** the copolymerizable solvent is styrene.

10. Resin composition according to any of the preceding claims, **characterized in that** the filler is calcium oxide, magnesium oxide, calcium carbonate, magnesium carbonate or a mixture thereof.

11. Resin composition according to any of the preceding claims, **characterized in that** the resin composition further comprises reinforcing fibers, thickening agent, anti-shrink additive and radical polymerization inhibitor.

12. Multicomponent resin system comprising at least two components (1) and (2), whereby component (1) comprises a thermosetting resin composition according to any of claims 1-11 and component (2) comprises a radical initiator in an amount from 1 up to and including 20 wt.%, whereby the amount is given relative to the total weight (in g) of the thermosetting resin composition.

13. Multicomponent resin system according to claim 12, **characterized in that** the radical initiator is a peroxide or a mixture of peroxides.

**14.** Use of the multi-component system according to claim 12 or 13 for producing a BMC part that is subjected to heat.

**15.** Method for curing a resin composition according to any of claims 1-11, **characterized in that** the curing is effected by mixing the resin composition according to any of claims 1-11 with a radical initiator to obtain a mixture and moulding said mixture at a temperature from 130°C up to and including 170°C.

**16.** Structural part obtained by mixing the components of a multi-component system according to claim 12 or 13 and moulding the mixture.

Europäisches Patentamt
European Patent Office
Office européen des brevets

# EUROPEAN SEARCH REPORT

Application Number
EP 12 19 3999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 783 026 A2 (DSM RESINS BV [NL] DSM RESINS BV) 9 July 1997 (1997-07-09)<br>----- | 1-16 | INV.<br>C08G63/553<br>C08L67/07 |
| A,D | EP 1 052 273 A1 (DSM NV [NL]) 15 November 2000 (2000-11-15)<br>----- | 1-16 | |
| A | JP 2002 128843 A (NIPPON CATALYTIC CHEM IND) 9 May 2002 (2002-05-09)<br>----- | 1-16 | |

TECHNICAL FIELDS SEARCHED (IPC)
C08G
C08L

The present search report has been drawn up for all claims

1

| Place of search | Date of completion of the search | Examiner |
|---|---|---|
| Munich | 16 April 2013 | Lohner, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 19 3999

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2013

| Patent document cited in search report | Publication date | Patent family member(s) | Publication date |
|---|---|---|---|
| EP 0783026 A2 | 09-07-1997 | DE 19600153 A1 | 10-07-1997 |
| | | EP 0783026 A2 | 09-07-1997 |
| | | ES 2139304 T3 | 01-02-2000 |
| EP 1052273 A1 | 15-11-2000 | AU 4627600 A | 05-12-2000 |
| | | EP 1052273 A1 | 15-11-2000 |
| | | EP 1181334 A1 | 27-02-2002 |
| | | MX PA01011524 A | 04-06-2002 |
| | | WO 0069971 A1 | 23-11-2000 |
| JP 2002128843 A | 09-05-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1052273 A